# EUROPEAN PATENT APPLICATION

(11) **EP 3 706 210 A1**
(43) Date of publication of application: **09.09.2020**
(21) Application number: 18872321.7
(22) Date of filing: 30.10.2018
(51) Int. Cl.: H01M 4/139, H01M 4/13, H01M 4/60, H01M 4/62, H01M 4/66

(54) **SLURRY COMPOSITION, AND ELECTRODE USING SLURRY COMPOSITION**

(30) Priority: 31.10.2017 JP 2017211291
(71) Applicant: Adeka Corporation, Tokyo 116-8554 (JP)
(72) Inventor: KAKIAGE, Kenji, Tokyo 116-8554 (JP); TAKENOUCHI, Hiromi, Tokyo 116-8554 (JP); HAMASAKI, Yuki, Tokyo 116-8554 (JP)
(74) Representative: Forstmeyer, Dietmar
(86) International application number: PCT/JP2018/040297
(87) International publication number: WO 2019/088088

(57) **Abstract**

An organosulfur compound-containing slurry composition for making an electrode. The slurry composition forms an electrode mixture layer that exhibits high adhesion to a current collector even when combined with inexpensive aluminum foil current collector and therefore achieves sufficient capacity. The slurry composition contains an organosulfur compound, a binder, an electroconductive agent, and a solvent and has a pH of 4.0 to 9.0. The slurry composition preferably contains a basic compound. The organosulfur compound is preferably at least one of sulfur-modified elastomer compounds, sulfur-modified polynuclear aromatic compounds, sulfur-modified pitch compounds, sulfur-modified aliphatic hydrocarbon oxides, sulfur-modified polyether compounds, polythienoacene compounds, carbon polysulfide compounds, sulfur-modified polyamide compounds, and sulfur-modified polyacrylonitrile compounds.

## Description

### Technical Field

This invention relates to a slurry composition suited for use in making secondary battery electrodes.

### Background Art

Nonaqueous secondary batteries, such as lithium ion secondary batteries, are widely used as a power source of portable electronic devices, such as mobile computers, camcorders, and personal digital assistances, because of their small size, lightness, high energy density, and good rechargeability. From the standpoint of environmental conservation, electric-powered vehicles and hybrid-powered vehicles using nonaqueous secondary batteries have been put to practical use. Hence, in recent years, further improvements on performance of secondary batteries have been demanded.

An electrode of a nonaqueous secondary battery generally includes a current collector and an electrode mixture layer formed on the collector. The electrode mixture layer is formed by, for example, applying a slurry composition to a collector followed by drying, the slurry composition being prepared by dispersing an electrode active material, a binder composition binding the active material, and so on in a dispersing medium. Electrode active materials have been the subject of intensive studies and development because they have large influences on battery performance.

Sulfur, theoretically having high electrical capacity, has been studied as a promising positive electrode active material. However, a lithium ion secondary battery using elemental sulfur as an active material has the problem that sulfur forms a compound with lithium at the time of discharge, and the compound dissolves in the organic solvent of a nonaqueous electrolyte. Eventually, the sulfur as an electrode active material gradually dissolves with repeated charge/discharge cycling, resulting in reduction of cycle characteristics of the secondary battery. To address this problem, organosulfur compounds having a sulfur-carbon bond have been developed and studied for use as an electrode active material (see, e.g., patent literatures 1 to 7).

Battery performance greatly reduces if a current collector and an electrode mixture layer are not in intimate contact. Aluminum foil is usually used as a collector for inexpensiveness. When an electrode mixture layer has insufficient adhesion to aluminum foil, carbon-coated aluminum foil, stainless steel foil, or a three-dimensional network structure (see, e.g., patent literature 8) may be used as a collector instead. In the case of using a slurry composition containing an organosulfur compound exemplified by a sulfur-modified polyacrylonitrile compound, the above described collectors other than inexpensive aluminum foil had to be used because such a slurry composition has poor adhesion to an aluminum collector (see, e.g., patent literatures 2 to 7).

### Citation List

Patent Literature:

Patent literature 1: JP 2003-151550A
Patent literature 2: US 2011200875A1
Patent literature 3: JP 2011-170991A
Patent literature 4: WO 2012/114651
Patent literature 5: JP 2012-099342A
Patent literature 6: JP 2012-150933A
Patent literature 7: JP 2012-150934A
Patent literature 8: JP H11-073973 A

### Summary of Invention

An object of the invention is to provide an organosulfur compound-containing slurry composition for making an electrode, the slurry composition being capable of forming an electrode mixture layer that exhibits high adhesion to a current collector, even when combined with inexpensive aluminum foil current collector, and therefore achieves sufficient capacity.

The inventors have conducted intensive investigations on the above problem. As a result, they have found that the adhesion between an electrode mixture layer and a collector improves when the pH of the slurry composition for electrodes is adjusted to within a specific range and completed the invention. The invention provides a slurry composition containing an organosulfur compound, a binder, an electroconductive agent (hereinafter "conductive agent"), and a solvent, and having a pH of 4.0 to 9.0.

### Brief Description of Drawings

[Fig. 1] Fig. 1 is a schematic cross-sectional view of an exemplary coin-shaped nonaqueous secondary battery using an electrode of the invention.
[Fig. 2] Fig. 2 schematically illustrates the basic structure of a cylindrical nonaqueous secondary battery using an electrode of the invention.
[Fig. 3] Fig. 3 is a perspective view, with parts in cross-section, illustrating the internal structure of a cylindrical nonaqueous secondary battery using an electrode of the invention.

### Description of Embodiments

Embodiments for carrying out the invention will be described. The slurry composition of the invention contains an organosulfur compound, a binder, a conductive agent, and a solvent. The components making up the slurry composition of the invention will be described in sequence.

### [I] Organosulfur compound

As used herein, the term "organosulfur compound" denotes a compound capable of absorbing and releasing lithium ions and useful as an electrode active material of secondary batteries and having a sulfur content of at least 25 mass%. Examples of the organosulfur compound include sulfur-modified elastomer compounds, sulfur-modified polynuclear aromatic compounds, sulfur-modified pitch compounds, sulfur-modified aliphatic hydrocarbon oxides, sulfur-modified polyether compounds, polythienoacene compounds, carbon polysulfide compounds, sulfur-modified polyamide compounds, and sulfur-modified polyacrylonitrile compounds. The sulfur content of the organosulfur compound can be measured by, e.g., elemental analysis using a CHN analyzer capable of measuring sulfur and oxygen elemental concentrations (e.g., vario MICRO cube, from Elementar).

The sulfur-modified elastomer compound is a compound obtained by heat treating a rubber/elemental sulfur mixture in a non-oxidative atmosphere. Examples of the rubber include natural rubber, isoprene rubber, butadiene rubber, styrene-butadiene rubber, and acrylonitrile-butadiene rubber. These rubbers may be used either individually or in combination of two or more thereof. The rubber may be either vulcanized or unvulcanized.

The ratio of elemental sulfur to rubber in the heat treatment system is preferably 100 to 1500 parts, more preferably 150 to 1000 parts, by mass of sulfur per 100 parts by mass of rubber.

The mixture to be heat-treated may contain at least one known vulcanization accelerator. The vulcanization accelerator is preferably added in an amount of 1 to 250 parts, more preferably 5 to 50 parts, by mass per 100 parts by mass of the rubber.

The heating temperature is preferably 250° to 550°C, more preferably 300° to 450°C.

It is preferable to remove unreacted elemental sulfur from the resulting sulfur-containing elastomer compound by heating, solvent washing, or a like means. This is because unreacted elemental sulfur causes reduction of cycle characteristics of secondary batteries. With a view to securing a high charge/discharge capacity, the sulfur content of the sulfur-modified elastomer compound is preferably 40 to 70 mass%, more preferably 45 to 60 mass%.

The sulfur-modified polynuclear aromatic compound is a compound obtained by heat treating a mixture of a polynuclear aromatic compound and elemental sulfur in an non-oxidative atmosphere. Examples of the polynuclear aromatic compound include benzenoid aromatic compounds, such as naphthalene, anthracene, tetracene, pentacene, phenanthrene, chrysene, picene, pyrene, benzopyrene, perylene, and coronene; benzenoid aromatic compounds having a 5-membered ring; and these benzenoid aromatic compounds having a part of the carbon atoms displaced with a hetero atom, e.g., sulfur, oxygen, or nitrogen (i.e., heterocyclic benzenoid compounds). The polynuclear aromatic compounds may optionally have a substituent, such as a straight or branched acyclic alkyl group with 1 to 12 carbon atoms, an alkoxy group, a hydroxy group, a carboxy group, an amino group, an aminocabonyl group, an aminothio group, a mercaptothiocarbonylamino group, and a carboxyalkylcarbonyl group.

The polynuclear aromatic compound may be a compound having a repeating unit composed of an aromatic moiety and an acyclic hydrocarbon moiety. Examples of the aromatic moiety of the repeating unit include, in addition to the above recited aromatic compounds, benzene, pyrrolidine, pyrrole, pyridine, imidazole, pyrrolidone, tetrahydrofuran, triazine, thiophene, oxazole, thiazole, thiadiazole, triazole, phosphole, and silole. The aromatic moiety may have two or more aromatic rings fused together. The aromatic moiety may be fused with cyclopentane, cyclohexane, pyrrolidine, tetrahydrofuran, or a like ring. These aromatic moieties may optionally have a substituent, such as a straight or branched acyclic alkyl group with 1 to 12 carbon atoms, an alkoxy group, a hydroxy group, a carboxy group, an amino group, an aminocabonyl group, an aminothio group, a mercaptothiocarbonylamino group, and a carboxyalkylcarbonyl group.

The acyclic hydrocarbon moiety of the repeating unit is a straight or branched acyclic hydrocarbon moiety, such as an alkylene, alkenylene, or alkynylene group. The acyclic hydrocarbon moiety preferably has 2 to 20, more preferably 3 to 10, even more preferably 4 to 8, carbon atoms. In view of ease of handling and price, an alkylene and an alkenylene group are preferred, with butene-1,4-diyl, hexane-1,6-diyl, octane-1,8-diyl, vinylene, and 1,3-butadiene-1,4-diyl, and their structural isomers being more preferred.

The ratio of the elemental sulfur to the polynuclear aromatic compound in the heat treatment system is preferably 100 to 1500 parts, more preferably 150 to 1000 parts, by mass of sulfur per 100 parts by mass of the polynuclear aromatic compound.

The heating temperature is preferably 250° to 550°C, more preferably 300° to 450°C.

It is preferable to remove unreacted elemental sulfur from the resulting sulfur-modified polynuclear aromatic compound by heating, solvent washing, or a like means. This is because unreacted elemental sulfur causes reduction of cycle characteristics of secondary batteries. With a view to securing high charge/discharge capacity, the sulfur content of the sulfur-modified polynuclear aromatic compound is preferably 40 to 70 mass%, more preferably 45 to 60 mass%.

The sulfur-modified pitch compound is a compound obtained by heat treating a pitch/elemental sulfur mixture in an non-oxidative atmosphere. Examples of the pitch include petroleum pitch, coal pitch, mesophase pitch, asphalt, coal tar, coal-tar pitch, organic synthesis pitch obtained by polycondensation of a condensed ring aromatic hydrocarbon compound, and organic synthesis pitch obtained by polycondensation of a heteroatom-containing condensed ring aromatic hydrocarbon compound. Pitch is a mixture of various compounds and contains one or more condensed ring aromatic compounds. The condensed ring aromatic compound may contain nitrogen or sulfur as well as carbon and hydrogen in the ring.

The ratio of elemental sulfur to pitch in the heat treatment system is preferably 100 to 1000 parts, more preferably 150 to 500 parts, by mass of sulfur per 100 parts by mass of pitch.

The heating temperature is preferably 300° to 500°C, more preferably 350° to 500°C.

It is preferable to remove unreacted elemental sulfur from the resulting sulfur-modified pitch compound by heating, solvent washing, or a like means. This is because unreacted elemental sulfur causes reduction of cycle characteristics of secondary batteries. With a view to securing high charge/discharge capacity, the sulfur content of the sulfur-modified pitch compound is preferably 25 to 70 mass%, more preferably 30 to 60 mass%.

The sulfur-modified aliphatic hydrocarbon oxide is a compound obtained by heat treating an aliphatic hydrocarbon oxide and elemental sulfur in an non-oxidative atmosphere. As used herein, the term "aliphatic hydrocarbon oxide" refers to a compound having an aliphatic hydrocarbon structure and at least one group selected from the group consisting of a hydroxy, a carbonyl, a carboxy, and an epoxy group. The hydrocarbon structure may have an unsaturated bond. The aliphatic hydrocarbon structure of the aliphatic hydrocarbon oxide may be either straight or branched but is preferably straight in terms of charge/discharge capacity. The aliphatic hydrocarbon oxide preferably has 4 to 12, more preferably 6 to 10, carbon atoms in terms of charge/discharge capacity. The carbon to oxygen atomic ratio of the aliphatic hydrocarbon oxide is preferably 3 or greater, more preferably 4 or greater because the oxygen of the aliphatic hydrocarbon oxide releases on heating with sulfur.

Examples of preferred aliphatic hydrocarbon oxide include alcohols, such as 1-butanol, 2-butanol, 1-pentanol, 3-pentanol, 1-hexanol, 1-heptanol, 1-octanol, 1-nonanol, 1-decanol, 1-butanol, 1-pentanol, 1-hexanol, 1-heptanol, 1-octanol, 2-octanol, 1-nonanol, and 1-decanol; aldehydes, such as butanal, pentanal, hexanal, heptanol, octanal, nonanol, and decanal; ketones, such as methyl ethyl ketone, diethyl ketone, and methyl hexyl ketone; carboxylic acids, such as octanoic acid, nonanoic acid, and decanoic acid; and epoxy compounds, such as 1,2-butylene oxide, 1,2-hexylene oxide, 1,2-octylene oxide, and 1,2-decylene oxide.

The ratio of elemental sulfur to the aliphatic hydrocarbon oxide in the heat treatment system is preferably 100 to 1000 parts, more preferably 200 to 500 parts, by mass of sulfur per 100 parts by mass of the aliphatic hydrocarbon oxide. The heating temperature is preferably 300° to 500°C, more preferably 350° to 450°C. When the heating temperature is higher than the boiling point of the aliphatic hydrocarbon oxide, it is recommended to conduct the heat treatment while refluxing the aliphatic hydrocarbon oxide.

It is preferable to remove unreacted elemental sulfur from the resulting sulfur-modified aliphatic hydrocarbon oxide by heating, solvent washing, or a like means because residual elemental sulfur causes reduction of cycle characteristics of secondary batteries. With a view to securing high charge/discharge capacity, the sulfur content of the sulfur-modified aliphatic hydrocarbon oxide is preferably 45 to 75 mass%, more preferably 50 to 70 mass%.

The sulfur-modified polyether compound is a compound obtained by heat treating a polyether compound and elemental sulfur in an non-oxidative atmosphere. Examples of the polyether compound include polyethylene glycol, polypropylene glycol, ethylene oxide-propylene oxide copolymers, and polytetramethylene glycol. The polyether compound may have an alkyl ether terminal, alkyl phenyl ether terminal, or acyl terminal, or may be an ethylene oxide adduct of a polyol, such as glycerol or sorbitol.

The ratio of elemental sulfur to the polyether compound in the heat treatment system is preferably 100 to 1000 parts, more preferably 200 to 500 parts, by mass of sulfur per 100 parts by mass of the polyether compound.

The heating temperature is preferably 250° to 500°C, more preferably 300° to 450°C.

It is preferable to remove unreacted elemental sulfur from the resulting sulfur-modified polyether compound by heating, solvent washing, or a like means because residual elemental sulfur causes reduction of cycle characteristics of secondary batteries. The sulfur content of the sulfur-modified polyether compound is preferably 30 to 75 mass%, more preferably 40 to 70 mass%.

The polythienoacene compound is a compound having a sulfur-containing polythienoacene structure represented by general formula (1): 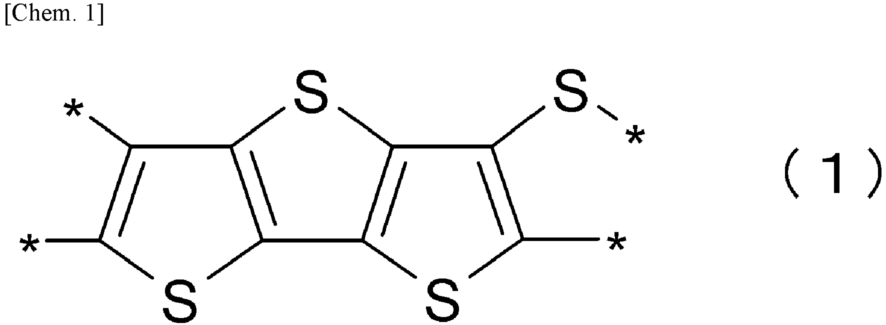 wherein * represents a bond.

The polythienoacene compound is obtained by heat treating an aliphatic polymeric compound having a linear structure, such as a polyethylene compound, or a polymeric compound having a thiophene structure, such as polythiophene, and elemental sulfur in a non-oxidative atmosphere.

In using an aliphatic polymeric compound having a linear structure as a starting material, the ratio of the elemental sulfur to the aliphatic polymeric compound in the heat treatment system is 100 to 2000 parts, more preferably 150 to 1000 parts, by mass of sulfur per 100 parts by mass of the polymeric compound. When in using a polymeric compound having a thiophene structure, the ratio of the elemental sulfur to the polymeric compound in the heat treatment system is 100 to 1000 parts, more preferably 150 to 800 parts, by mass of sulfur per 100 parts by mass of the polymeric compound.

The heating temperature is preferably 300° to 600°C, more preferably 350° to 500°C.

It is preferable to remove unreacted elemental sulfur from the resulting polythienoacene compound by heating, solvent washing, or a like means because residual elemental sulfur causes reduction of cycle characteristics of secondary batteries. The sulfur content of the polythienoacene compound is preferably 30 to 80 mass%, more preferably 40 to 70 mass%, in terms of charge/discharge capacity.

The carbon polysulfide compound is a compound represented by general formula: (CSₓ)ₙ (wherein x is 0.5 to 2; and n is 4 or greater), which is obtained by, for example, allowing an alkali metal sulfide/elemental sulfur composite to react with a halogenated unsaturated hydrocarbon, such as hexachlorobutadiene, to form a precursor and heating the precursor. The alkali metal sulfide/elemental sulfur composite is prepared by allowing an alkali metal sulfide dissolved in a solvent (e.g., ethanol) to react with sulfur at 10° to 40°C. The sulfur to alkali metal sulfide molar ratio is 2 to 6. The reaction between the alkali metal sulfide/elemental sulfur composite and the halogenated unsaturated hydrocarbon is carried out by dissolving the composite in an organic solvent (e.g., N-methyl-2-pyrrolidone) and allowing it to react with the halogenated unsaturated hydrocarbon at 10° to 40°C. The halogenated unsaturated hydrocarbon is preferably used in an amount of 5 to 30 parts by mass per 100 parts by mass of the composite. The precursor resulting from the reaction between the composite and the halogenated unsaturated hydrocarbon is washed, e.g., with water to remove an excess of the alkali metal sulfide or a salt formed between the alkali metal and the halogen and then heated at 300° to 450°C, preferably 320° to 400°C.

The resulting carbon polysulfide compound includes unreacted elemental sulfur . It is preferred to remove unreacted elemental sulfur from the resulting carbon polysulfide compound by heating, solvent washing, or a like means because residual elemental sulfur causes reduction of cycle characteristics of secondary batteries. With a view to securing high charge/discharge capacity, the sulfur content of the carbon polysulfide compound is preferably 65 to 75 mass%, more preferably 67 to 73 mass%.

Examples of the alkali metal sulfide to be used in the preparation of the carbon polysulfide compound include lithium sulfide, sodium sulfide, and potassium sulfide.

The sulfur-modified polyamide compound is an organic sulfur compound having a carbon structure derived from a polymer containing an amide linkage, specifically a compound obtained by heat treating, in an non-oxidative atmosphere, a mixture of an aminocarboxylic acid compound and elemental sulfur or a mixture of a polyamine compound, a polycarboxylic acid compound, and elemental sulfur.

The term "aminocarboxylic acid compound" as used herein refers to a compound having one amino group and at least one carboxy group per molecule. Examples of the aminocarboxylic acid compound include aminobenzoic acids, such as 3,4-diaminobenzoic acid, 3,5-diaminobenzoic acid, p-aminobenzoic acid, and m-aminobenzoic acid; 4-aminophenylacetic acid, 3-aminophenylacetic acid, 3-(4-aminophenyl)propionic acid, 3-aminopropionic acid, 4-aminobutanoic acid, 5-aminopentanoic acid, 2,5-diaminopentanoic acid; and amino acids, such as alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, valine, theanine, tricholomic acid, kainic acid, domic acid, ibotenic acid, and acromelic acid.

The term "polyamine compound" as used herein refers to a compound having at least two amino groups per molecule. Examples of the polyamine compound include urea, ethylenediamine, ethylenetriamine, diethylenetriamine, putrescine, cadaverine, hexamethylenediamine, o-phenylenediamine, m-phenylenediamine, p-phenylenediamine, 4-aminobenzenemethaneamine, 4-aminobenzeneethaneamine, melamine, 1,2,4-triaminobenzene, 1,3,5-triaminobenzene, and benzoguanamine.

The term "polycarboxylic acid compound" as used herein refers to a compound having at least two carboxy groups per molecule. Examples of the polycarboxylic acid compound include terephthalic acid, fumaric acid, tartaric acid, maleic acid, benzene-1,3-dicarboxylic acid, phthalic acid, oxalic acid, malonic acid, succinic acid, glutaric acid, adipic acid, pimelic acid, suberic acid, azelaic acid, sebacic acid, and ethylenediaminetetraacetic acid. Acid anhydrides may also be used, such as phthalic anhydride and maleic anhydride. In the case where the sulfur-modified polyamide compound is prepared from the polyamine compound and polycarboxylic acid compound, the polyamine compound to polycarboxylic acid compound molar ratio is preferably 0.9 to 1.1.

The ratio of elemental sulfur to the aminocarboxylic acid compound in the heat treatment system is preferably 100 to 500 parts, more preferably 150 to 400 parts, by mass of sulfur per 100 parts by mass of the aminocarboxylic acid compound. The ratio of elemental sulfur to the polyamine compound and polycarboxylic acid compound in the heat treatment system is preferably 100 to 500 parts, more preferably 150 to 400 parts, by mass of sulfur per 100 parts by mass of the sum of the polyamine compound and the polycarboxylic acid compound.

The heating temperature is preferably 250° to 600°C, more preferably 350° to 500°C.

It is preferable to remove unreacted elemental sulfur from the resulting sulfur-modified polyamide compound by heating, solvent washing, or a like means because residual elemental sulfur causes reduction of cycle characteristics of secondary batteries. The sulfur content of sulfur-modified polyamide compound is preferably 40 to 70 mass%, more preferably 45 to 60 mass%, in terms of charge/discharge capacity.

The sulfur-modified polyacrylonitrile compound is a compound obtained by heat treating a mixture of polyacrylonitrile and elemental sulfur in a non-oxidative atmosphere. The polyacrylonitrile may be a homopolymer of acrylonitrile or a copolymer of acrylonitrile and a comonomer. The ratio of acrylonitrile in the polyacrylonitrile is preferably at least 90 mass% for the following reasons. For one thing, the battery performance reduces with decrease in acrylonitrile ratio. For another, polyacrylonitrile with a high acrylonitrile ratio carbonizes relatively easily to provide a carbide that exhibits relatively high conductivity, which increases the use efficiency of the active material, leading to an increase in capacity. Acrylonitrile homopolymer is therefore preferable to acrylonitrile copolymers. Examples of the comonomer include acrylic acid, vinyl acetate, N-vinylformamide, and N,N'-methylenebis(acrylamide).

The heating temperature is preferably 250° to 550°C, more preferably 350° to 450°C. The ratio of elemental sulfur to the polyacrylonitrile in the heat treatment system is 100 to 1500 parts, more preferably 150 to 1000 parts, by mass of sulfur per 100 parts by mass of the polyacrylonitrile.

It is preferable to remove unreacted elemental sulfur from the resulting sulfur-modified polyacrylonitrile by heating, solvent washing, or a like means because residual elemental sulfur causes reduction of cycle characteristics of secondary batteries. The sulfur content of sulfur-modified polyacrylonitrile is preferably 25 to 60 mass%, more preferably 30 to 55 mass%, in terms of charge/discharge capacity.

The non-oxidative atmosphere, in which the organic compound and sulfur are heated, may have an oxygen concentration of not more than 5 vol%, preferably not more than 2 vol%. More preferably, the non-oxidative atmosphere is substantially free of oxygen, i.e. an inert gas (e.g., nitrogen, helium, or argon) atmosphere or a sulfur atmosphere.

The shape of the organosulfur compound is not particularly limited and may be spherical, polyhedral, fibrous, rod-like, platy, flaky, or amorphous. The organosulfur compound may have a hollow shape. Preferred of these shapes is a spherical or polyhedral shape for uniform formation of an electrode mixture layer.

The organosulfur compound with too large a particle size may fail to form a uniform and smooth electrode mixture layer, and with too small a particle size, may cause handling problems in slurrying. In view of this, the average particle size, in terms of D50, of the organosulfur compound is preferably 0.5 to 100 µm, more preferably 1 to 50 µm, even more preferably 1 to 30 µm. The average particle size (D50) as referred to herein denotes a 50% particle diameter as measured by the laser diffraction method, in which the diameter of secondary particles is measured.

The elemental sulfur for use in the invention may be of any form, such as powdered sulfur, insoluble sulfur, precipitated sulfur, and colloidal sulfur. Taking into consideration uniform dispersibility in the reactant compound, powdered sulfur is preferred.

Of the aforementioned organosulfur compounds preferred is a sulfur-modified polyacrylonitrile compound, for it does not allow sulfur to elute and provides a secondary battery having excellent cycle characteristics. The organosulfur compounds may be used either individually or in combination of two or more thereof.

### [II] Binder

Any known binder may be used in the invention. Examples of suitable binders include styrene-butadiene rubber, butadiene rubber, acrylonitrile-butadiene rubber, ethylene-propylene-diene rubber, styrene-isoprene rubber, fluororubber, polyethylene, polypropylene, polyamides, polyamide-imides, polyimides, polyacrylonitrile, polyurethane, polyvinylidene fluoride, polytetrafluoroethylene, styrene-acrylic ester copolymers, ethylene-vinyl alcohol copolymers, polymethyl methacrylate, polyacrylates, polyvinyl alcohol, polyethylene oxide, polyvinylpyrrolidone, polyvinyl ethers, polyvinyl chloride, polyacrylic acid, methyl cellulose, carboxymethyl cellulose, sodium carboxymethyl cellulose, cellulose nanofiber, and starch.

Aqueous binders are preferred for low environmental burden and low likelihood of elution of sulfur. Styrene-butadiene rubber, sodium carboxymethyl cellulose, and polyacrylic acid are more preferred.

These binders may be used either individually or in combination of two or more thereof.

The binder is used in an amount of 1 to 30 parts, more preferably 1 to 20 parts, by mass per 100 parts by mass of the electrode active material.

### [III] Conductive agent

Any conductive agent known for use in electrodes can be used in the invention. Examples of suitable conductive agents include carbon materials, such as natural graphite, synthetic graphite, coal tar pitch, carbon black, acetylene black, Ketjen black, channel black, furnace black, lampblack, thermal black, carbon nanotubes, vapor-grown carbon fiber, graphene, fullerene, and needle coke; metal powders, such as aluminum powder, nickel powder, and titanium powder; conductive metal oxides, such as zinc oxide and titanium oxide; and sulfides, such as La₂S₃, Sm₂S₃, Ce₂S₃, and TiS₂. The conductive agent may be mixed into the reaction system in preparing the organosulfur compound.

The particle size of the conductive agent is preferably 0.0001 to 100 µm, more preferably 0.01 to 50 µm.

The content of the conductive agent is usually 0.1 to 50 parts, preferably 1 to 30 parts, more preferably 2 to 20 parts, by mass per 100 parts by mass of the electrode active material.

### [IV] Solvent

Examples of the solvent used to prepare the slurry of the invention include propylene carbonate, ethylene carbonate, diethyl carbonate, dimethyl carbonate, ethyl methyl carbonate, 1,2-dimethoxyethane, 1,2-diethoxyethane, acetonitrile, propionitrile, tetrahydrofuran, 2-methyltetrahydrofuran, dioxane, 1,3-dioxolan, nitromethane, N-methylpyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, tetrahydrofuran, dimethyl sulfoxide, sulfolane, γ-butyrolactone, water, and alcohols. The amount of the solvent to be used is decided depending on the method of applying the slurry. In the case of using a doctor blade, the solvent is used in an amount of preferably 20 to 300 parts, more preferably 30 to 200 parts, by mass per 100 parts by mass of the sum of the organosulfur compound, binder, and conductive agent.

### [V] Basic compound

The slurry composition of the invention preferably contains a basic compound. Examples of the basic compound include ammonia, alkylamine compounds, ethanolamine compounds, polyamine compounds, aromatic amine compounds, alkali metal hydroxides, carbonic salt compounds, carboxylic salt compounds, and phosphoric salt compounds. Examples of the alkylamine compounds include primary alkylamines, such as methylamine, ethylamine, propylamine, isopropylamine, butylamine, t-butylamine, isobutylamine, hexylamine, and cyclohexylamine; secondary alkylamines, such as dimethylamine, diethylamine, dipropylamine, diisopropylamine, dibutylamine, and piperidine; and tertiary alkylamines, such as trimethylamine, triethylamine, tripropylamine, tributylamine, and trioctylamine.

Examples of the ethanolamine compounds include monoethanolamine, diethanolamine, triethanolamine, methylethanolamine, methyldiethanolamine, dimethylethanolamine, ethylethanolamine, diethylethanolamine, ethyldiethanolamine, butylethanolamine, propylethanolamine, butyldiethanolamine, and cyclohexayldiethanolamine.

Examples of the polyamine compounds include ethylenediamine, diethylenetriamine, tetramethylethylenediamine, and piperazine.

Examples of the aromatic amine compounds include aniline, toluidine, pyridine, bipyridine, and phenanthroline.

Examples of the alkali metal hydroxides include lithium hydroxide, sodium hydroxide, and potassium hydroxide.

Examples of the carbonic salt compounds include lithium carbonate, sodium carbonate, potassium carbonate, sodium hydrogencarbonate, and potassium hydrogencarbonate.

Examples of the carboxylic salt compounds include lithium salts and sodium salts of acetic acid, propionic acid, fumaric acid, benzoic acid, terephthalic acid, acrylic acid, malonic acid, and thiophenecarboxylic acid.

Examples of the phosphoric salt compounds include disodium hydrogenphosphate, trisodium phosphate, dipotassium hydrogenphosphate, and tripotassium phosphate.

These basic compounds may be used either individually or in combination of two or more thereof.

Of the basic compounds above, preferred are ammonia, alkylamine compounds, and polyamine compounds for their high volatility enabling easy removal even when used in excess. More preferred are ammonia, methylamine, ethylamine, propylamine, isopropylamine, dimethylamine, diethylamine, dipropylamine, diisopropylamine, trimethylamine, and ethylenediamine, with ammonia being the most preferred.

A basic binder or a basic conductive agent may serve as a basic compound.

The content of the basic compound in the slurry composition of the invention is preferably adjusted so that the slurry composition may have a pH of 4.0 to 9.0, more preferably 4.5 to 8.5, at 25°C. The amount of the basic compound required for adjusting the pH of the slurry composition to the above range varies depending on the basic compound or the contents of the organosulfur compound, binder, and conductive agent in the slurry composition. It is easy for those skilled in the art to decide appropriately the requisite amount of the basic compound for the pH adjustment.

Where needed, the slurry composition of the invention may additionally contain other additive components as long as the effects of the invention are not impaired, such as viscosity modifiers, reinforcing materials, and antioxidants. In this regard, known additives may be used in known compounding ratios.

The slurry composition of the invention has a pH of 4.0 to 9.0 at 25°C. If the pH is lower than 4.0 or higher than 9.0, the secondary battery made by using such a slurry composition can have reduced capacity or cycle characteristics. As used herein, the term "pH" of the slurry composition refers to a pH measured at 25°C using a glass-electrode pH meter H98103S from HANNA Instruments, Japan. The sample is prepared by dispersing 0.5 g of the slurry composition in 10.0 g of distilled water having a resistivity of 18 MΩ·cm or higher and ultrasonicated at a frequency of 40 kHz and power of 160 W for 10 minutes.

The slurry composition of the invention is prepared by, for example, a method including a slurrying step in which the organosulfur compound, binder, and conductive agent are dispersed or dissolved in a solvent and a pH adjusting step in which the pH of the resulting slurry is adjusted to 4.0 to 9.0 by the addition of a compound, such as the basic compound.

### [VI] Slurrying step

The organosulfur compound, binder, and conductive agent are dispersed or dissolved in a solvent. The organosulfur compound, binder, and conductive agent may be put into the solvent and dispersed either at the same time or successively. To achieve uniform dispersing, it is preferred that the binder, conductive agent, and organosulfur compound be added to the solvent and dispersed successively in that order.

When the slurry composition of the invention contains the above described other components, the other components may be added and dispersed at the same time or successively. It is recommended that they be added successively, each followed by dispersing.

The dispersing method is not particularly limited. The dispersing on an industrial scale can be carried out using, for example, ordinary ball mills, sand mills, bead mills, pigment dispersers, attritors, ultrasonic dispersers, homogenizers, rotation-revolution mixers, planetary mixers, FILMIX, and JET PASTER.

### [VII] pH adjusting step

The pH of the slurry composition from the slurrying step is adjusted to 4.0 to 9.0 by, for example, the addition of the basic compound. The basic compound may be added to the slurry composition as is or as dissolved in a solvent. The basic compound may be added to the system at any stage of the slurrying step.

The electrode of the invention will now be described. The electrode of the invention has a current collector and an electrode mixture layer formed on the collector. The electrode of the invention has the electrode mixture layer formed of the slurry composition of the invention. The current collector and the electrode mixture layer will now be described.

### [VIII] Current collector

The current collector is made of a conductive material, such as titanium, titanium alloys, aluminum, aluminum alloys, copper, nickel, stainless steel, and nickel-plated steel. The current collector may have the shape of foil, plate, net, foam, nonwoven, and so forth. The current collector may be porous or nonporous. The conductive material may be surface-treated for the improvement of adhesion and electrical characteristics. Of the conductive materials recited, preferred is aluminum in terms of conductivity and price. Aluminum foil is particularly preferred. The current collector usually has a thickness of 1 to 100 µm, though not exclusively.

### [IX] Electrode mixture layer

The electrode mixture layer of the electrode of the invention is made of the slurry composition of the invention. An electrode mixture layer formed of a conventional slurry composition containing an organosulfur compound has insufficient adhesion to a current collector. In contrast, the electrode mixture layer formed of the slurry composition of the invention exhibits improved adhesion to the current collector. Therefore, even when in using inexpensive aluminum foil as a current collector, high capacity and excellent cycle characteristics are obtained.

The electrode of the invention is obtained by applying the slurry composition of the invention to a current collector, followed by drying to form an electrode mixture layer.

### [X] Making of electrode

The slurry composition of the invention is applied to a current collector. Application is achieved by any method, including die coating, comma roller coating, curtain coating, spraying, gravure coating, flexo coating, knife coating, doctor blade coating, reverse roller coating, brushing, and dipping. Die coating, doctor blade coating, and knife coating methods are preferred for obtaining good surface conditions of the coating layer in accordance with physical property and drying property of the slurry such as viscosity.

In making a lithium ion secondary battery, the slurry composition may be applied to either one side or both sides of the current collector. Application to both sides of the current collector may be conducted simultaneously or successively. The slurry may be applied to the surface of the current collector continuously or discontinuously or in a stripe pattern. The thickness, length, and width of the coating layer can be decided as appropriate according to the battery size and the like.

The slurry composition on the current collector is then dried by any known drying method, such as exposure to warm air, hot air, or low humidity air; vacuum drying; placing in a heating oven; far-infrared, infrared, or electron beam irradiation; or a combination thereof. In drying by heating, while the heating temperature is usually about 50° to 180°C, the temperature and other heating conditions are decided as appropriate to the applied amount of the slurry composition, the boiling point of the solvent used, and the like. Upon drying, volatile components including the solvent vaporize from the coating layer of the slurry composition to make an electrode composed of the current collector and an electrode mixture layer formed thereon.

If necessary, the resulting electrode of the invention may be subjected to pressing under predetermined conditions. Pressing is carried out in a usual manner. Mold pressing or roller pressing is preferred. The pressing pressure is preferably, but not limited to, 0.1 to 3 t/cm².

The electrode prepared using the slurry composition of the invention is used particularly, though not exclusively, in nonaqueous electric storage devices using a nonaqueous electrolyte, such as primary batteries, secondary batteries, electric double layer capacitors, and lithium ion capacitors. The electrode is preferably used in nonaqueous secondary batteries, more preferably in lithium ion secondary batteries.

### [XI] Battery

The nonaqueous secondary battery is composed mainly of a positive electrode, a negative electrode, a nonaqueous electrolyte, and a separator.

The electrode produced by the invention is useful as a positive electrode or negative electrode of a battery.

When the electrode of the invention is used as a positive electrode, an electrode having a known negative electrode active material is used as a negative electrode. When in using as a negative electrode, an electrode having a known positive electrode active material is used as a positive electrode. The electrode having opposite polarity to the electrode of the invention will be called a counter electrode.

Examples of known negative electrode active materials include natural graphite, synthetic graphite, non-graphitizing carbon, graphitizing carbon, lithium, lithium alloys, silicon, silicon alloys, silicon oxide, tin, tin alloys, tin oxide, phosphorus, germanium, indium, copper oxide, antimony sulfide, titanium oxide, iron oxide, manganese oxide, cobalt oxide, nickel oxide, lead oxide, ruthenium oxide, tungsten oxide, zinc oxide, and complex oxides, such as LiVO₂, Li₂VO₄, and Li₄Ti₅O₁₂. These active materials may be used either individually or in combination.

Examples of known positive electrode active materials include lithium-transition metal complex oxides, lithium-containing transition metal phosphate compounds, and lithium-containing silicate compounds. The transition metal of the lithium-transition metal complex oxides is preferably vanadium, titanium, chromium, manganese, iron, cobalt, nickel, or copper. Examples of the lithium-transition metal complex oxides include lithium-cobalt complex oxides, such as LiCoO₂; lithium-nickel complex oxides, such as LiNiO₂; and lithium-manganese complex oxides, such as LiMnO₂, LiMn₂O₄, and Li₂MnO₃. The transition metal that mainly composes the lithium-transition metal complex oxide may be partially substituted with other metals, e.g., aluminum, titanium, vanadium, chromium, manganese, iron, cobalt, lithium, nickel, copper, zinc, magnesium, gallium, or zirconium. Specific examples of such substituted lithium-transition metal complex oxides include Li_{1.1}Mn_{1.8}Mg_{0.1}O₄, Li_{1.1}Mn_{1.85}Al_{0.05}O₄, LiNi_{0.5}Co_{0.2}Mn_{0.3}O₂, LiNi_{0.8}Co_{0.1}Mn_{0.1}O₂, LiNi_{0.5}Mn_{0.5}O₂, LiNi_{0.80}Co_{0.17}Al_{0.03}O₂, LiNi_{0.80}Co_{0.15}Al_{0.05}O₂, LiNi_{1/3}Co_{1/3}Mn_{1/3}O₂, LiNi_{0.6}Co_{0.2}Mn_{0.2}O₂, LiMn_{1.8}Al_{0.2}O₄, LiMn_{1.5}Ni_{0.5}O₄, and Li₂MnO₃-LiMo₂ (where M = Co, Ni, or Mn). The transition metal of the lithium-containing transition metal phosphate compounds is preferably vanadium, titanium, manganese, iron, cobalt, or nickel. Examples of the lithium-containing transition metal phosphate compounds include iron phosphate compounds, such as LiFePO₄ and LiMnₓFe₁₋ₓPO₄; cobalt phosphate compounds, such as LiCoPO₄; these lithium-containing transition metal phosphate compounds with part of their transition metal, which mainly composes the compounds, substituted with other metals, e.g., aluminum, titanium, vanadium, chromium, manganese, iron, cobalt, lithium, nickel, copper, zinc, magnesium, gallium, zirconium, or niobium; and vanadium phosphate compounds, such as Li₃V₂(PO₄)₃. The lithium-containing silicate compound is exemplified by Li₂FeSiO₄. These positive electrode active materials may be used either individually or in combination thereof.

The counter electrode is made by the above described method for preparing the slurry composition of the invention and the method for making the electrode in which the organosulfur compound is replaced with a known negative or positive electrode active material. While the method for preparing the slurry composition of the invention essentially involves the pH adjusting step, the pH adjustment of the slurry may be omitted in making the counter electrode.

### [XIII] Nonaqueous electrolyte

The nonaqueous electrolyte may be a liquid electrolyte prepared by dissolving an electrolyte in an organic solvent, a gelled polymer electrolyte prepared by dissolving an electrolyte in an organic solvent followed by polymerization (gelation), a pure polymer electrolyte composed of an electrolyte dispersed in a polymer, and an inorganic solid electrolyte.

The electrolyte of the liquid electrolyte and gelled polymer electrolyte may be selected from conventionally known lithium salts, such as LiPF₆, LiBF₄, LiAsF₆, LiCF₃SO₃, LiCF₃CO₂, LiN(CF₃SO₂)₂, LiN(C₂F₅SO₂)₂, LiN(SO₂F)₂, LiC(CF₃SO₂)₃, LiB(CF₃SO₃)₄, LiB(C₂O₄)₂, LiBF₂(C₂O₄), LiSbF₆, LiSiF₅, LiSCN, LiClO₄, LiCl, LiF, LiBr, Lil, LiAlF₄, LiAlCl₄, LiPO₂F₂, and their derivatives. It is preferred to use at least one member selected from the group consisting of LiPF₆, LiBF₄, LiClO₄, LiAsF₆, LiCF₃SO₃, LiN(CF₃SO₂)₂, LiN(C₂F₅SO₂)₂, LiN(SO₂F)₂, LiC(CF₃SO₂)₃, LiCF₃SO₃ derivatives, and LiC(CF₃SO₂)₃ derivatives.

Examples of the electrolyte used in the pure polymer electrolyte include LiN(CF₃SO₂)₂, LiN(C₂F₅SO₂)₂, LiN(SO₂F)₂, LiC(CF₃SO₂)₃, LiB(CF₃SO₃)₄, and LiB(C₂O₄)₂.

Examples of the inorganic solid electrolyte include phosphate compounds, such as Li₁₋ₓAₓB_{2-y}(PO₄)₃ (x = Al, Ge, Sn, Hf, Zr, Sc, or Y; B = Ti, Ge, or Zn; 0 < x ≤ 0.5), LiMPO₄ (M = Mn, Fe, Co, or Ni), and Li₃PO₄; lithium complex oxides, such as Li₃XO₄ (X = As or V), Ei₃₊ₓAₓB₁₋ₓO₄ (A = Si, Ge, or Ti; B = P, As, or V; 0 < x < 0.6), Li₄₊ₓAₓSi₁₋ₓO₄ (A = B, Al, Ga, Cr, or Fe; 0 < x < 0.4) or (A = Ni or Co; 0 < x <0.1), Li_{4-3y}Al_{y}SiO₄ (0 < y < 0.06), Li_{4-2y}Zn_{y}GeO₄ (0 < y < 0.25), LiAlO₂, Li₂BO₄, Li₄XO₄ (X = Si, Ge, or Ti), lithium titanate (LiTiO₂, LiTi₂O₄, Li₄TiO₄, Li₂TiO₃, Li₂Ti₃O₇, and Li₄Ti₅O₁₂); lithium- and halogen-containing compounds, such as LiBr, LiF, LiCl, LiPF₆, and LiBF₄; lithium- and nitrogen-containing compounds, such as LiPON, LiN(SO₂CF₃)₂, LiN(SO₂C₂F₅)₂, Li₃N, and LiN(SO₂C₃F₇)₂; lithium ion-conductive crystals having a perovskite structure, such as La_{0.55}Li_{0.35}TiO₃; crystals having a garnet structure, such as Li₇-La₃Zr₂O₁₃; glass, such as 50Li₄SiO₄·50Li₃BO₃; lithium phosphorus sulfide crystals, such as Li₁₀GeP₂S₁₂ and Li_{3.25}Ge_{0.25}P_{0.75}S₄; lithium phosphorus sulfide glass, such as 30Li₂S·26B₂S₃·44LiI, 63Li₂S·36SiS₂·1Li₃PO₄, 57Li₂S·38S1S₂5Li₄SiO₄, 70Li₂S·50GeS₂, and 50Li₂S·50GeS₂; and glass ceramics, such as Li₇P₃S₁₁ and Li_{3.25}P₀.₉₅S₄.

The organic solvent used in the preparation of the liquid electrode may be one or more of those commonly used in nonaqueous electrolytic solutions. Examples of suitable solvents include saturated cyclic carbonate compounds, saturated cyclic ester compounds, sulfoxide compounds, sulfone compounds, amide compounds, saturated acyclic carbonate compounds, acyclic ether compounds, cyclic ether compounds, and saturated acyclic ester compounds.

Of the organic solvent, saturated cyclic carbonate compounds, saturated cyclic ester compounds, sulfoxide compounds, sulfone compounds, and amide compounds have high relative permittivity and therefore play a role to increase the dielectric constant of the nonaqueous electrolyte. Saturated cyclic carbonate compounds are particularly preferred. Examples of the saturated cyclic carbonate compounds include ethylene carbonate, 1,2-propylene carbonate, 1,3-propylene carbonate, 1,2-butylene carbonate, 1,3-butylene carbonate, and 1,1-dimethylethylene carbonate. Examples of the saturated cyclic ester compounds include γ-butyrolactone, γ-valerolactone, γ-caprolactone, δ-hexanolacotne, and δ-octanolactone. Examples of the sulfoxide compounds include dimethyl sulfoxide, diethyl sulfoxide, dipropyl sulfoxide, diphenyl sulfoxide, and thiophene. Examples of the sulfone compounds include dimethyl sulfone, diethyl sulfone, dipropyl sulfone, diphenyl sulfone, sulfolane (also known as tetramethylene sulfone), 3-methylsulfolane, 3,4-dimethylsulfolane, 3,4-diphenylmethylsulfolane, sulfolene, 3-methylsulfolene, 3-ethylsulfolene, and 3-bromomethylsulfolene, with sulfolane and tetramethyl sulfolane being preferred. Examples of the amide compounds are N-methylpyrrolidone, dimethylformamide, and dimethylacetamide.

Of the above organic solvents, saturated acyclic carbonate compounds, acyclic ether compounds, cyclic ether compounds, and saturated acyclic ester compounds decrease the viscosity of the nonaqueous electrolyte and increase mobility of electrolyte ions thereby to improve battery characteristics, such as power density. To have a low viscosity brings about improvement on the low-temperature performance of the nonaqueous electrolyte. *Inter alia,* saturated acyclic carbonate compounds are preferred. Examples of suitable saturated acyclic carbonate compounds include dimethyl carbonate, ethylmethyl carbonate, diethyl carbonate, ethylbutyl carbonate, methyl-t-butyl carbonate, diisopropyl carbonate, and t-butylpropyl carbonate. Examples of the acyclic or cyclic ether compounds include dimethoxyethane, ethoxymethoxyethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl) ether, propylene glycol bis(trifluoroethyl) ether, ethylene glycol bis(trifluoromethyl) ether, and diethylene glycol bis(trifluoroethyl) ether, with dioxolane being preferred.

The saturated acyclic ester compounds are preferably mono- or diester compounds having a total of 2 to 8 carbon atoms per molecule, such as methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl. Preferred of them are methyl formate, ethyl formate, methyl acetate, ethyl acetate, propyl acetate, isobutyl acetate, butyl acetate, methyl propionate, and ethyl propionate.

In addition to this, acetonitrile, propionitrile, nitromethane, and their derivatives, and various ionic liquids are also usable as an organic solvent.

The concentration of the electrolyte in the liquid nonaqueous electrolyte as dissolved in the organic solvent is preferably 0.5 to 7 mol/1, more preferably 0.8 to 1.8 mol/l.

Examples of the polymer used in the gelled polymer electrolyte include polyethylene oxide, polypropylene oxide, polyvinyl chloride, polyacrylonitrile, polymethyl methacrylate, polyethylene, polyvinylidene fluoride, and polyhexafluoropropylene. Examples of the polymer used in the pure polymer electrolyte include polyethylene oxide, polypropylene oxide, and polystyrenesulfonic acid.

The compounding ratio and gelling method in the preparation of the gelled polymer electrolyte are not particularly limited, and any known techniques may be followed.

For the sake of improvements on battery life and safety, known additives may be added to the electrolyte, such as electrode film forming agents, antioxidants, flame retardants, and overcharge protection agents. In using electrolyte additives, they are used in a total amount usually of 0.01 to 10 parts, preferably of 0.1 to 5 parts, by mass relative to the total mass of the nonaqueous electrolyte.

### [IX] Separator

It is preferable to interpose a separator between the positive and the negative electrode in the nonaqueous secondary battery having the electrode of the invention. A commonly employed microporous polymer film can be used as a separator with no particular restriction. Polymer materials providing a microporous film separator include polyethylene, polypropylene, polyvinylidene fluoride, polyvinylidene chloride, polyacrylonitrile, polyacrylamide, polytetrafluoroethylene, polysulfone, polyether sulfone, polycarbonate, polyamides, polyimides, polyethers such as polyethylene oxide and polypropylene oxide, celluloses such as carboxymethyl cellulose and hydroxypropyl cellulose, poly(meth)acrylic acid and esters thereof; derivatives of these polymers; copolymers of monomers of the recited polymers; and polyblends of these polymer materials. The film may be coated with ceramic materials, such as alumina and silica, magnesium oxide, aramide resins, or polyvinylidene fluoride.

The separator may be a single film or a composite film composed of two or more films. Various additives may be added to the separator film with no particular limitation on the kind and amount. A film made of polyethylene, polypropylene, polyvinylidene fluoride, or polysulfone is particularly preferred for use in the secondary battery produced by the method of the invention.

The separator film is microporous for allowing the electrolyte ions to penetrate therethrough. Such a microporous film is prepared by (1) a phase separation method comprising inducing microphase separation in a solution of a polymer in a solvent in film form and removing the solvent by extraction and (2) a stretching method comprising extruding a molten polymer at a high draft ratio, heat treating the extruded film to unidirectionally align the crystals, and stretching the film to form voids between crystals. The method of microporous film formation is chosen according to the film material.

When a polymer electrolyte or an inorganic solid electrolyte is used, the separator may be omitted.

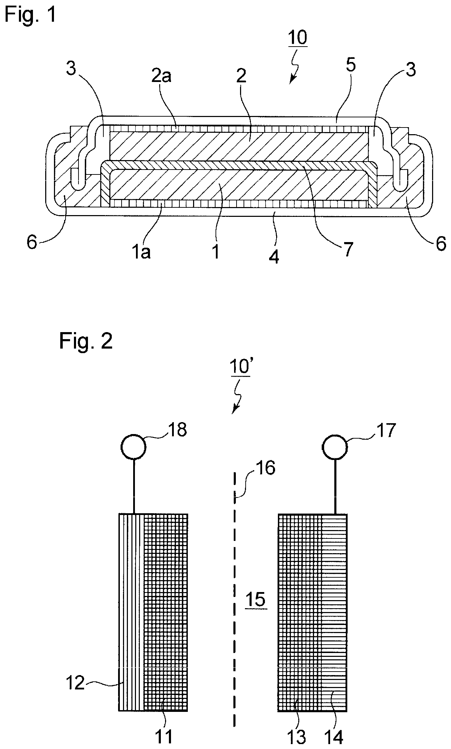

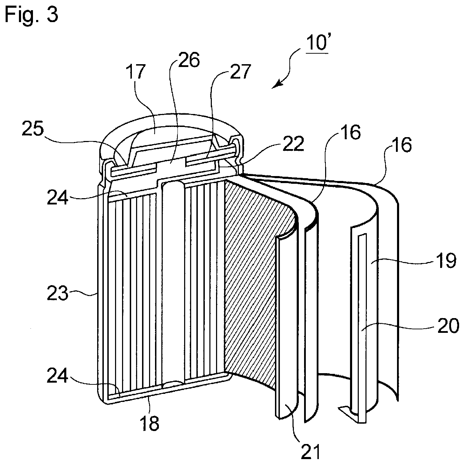

The nonaqueous secondary battery having the above described structure made by the method of the invention is not particularly limited in shape and may be coin-shaped, cylindrical, prismatic, or of laminate film form. Fig. 1 illustrates an example of a coin-shaped nonaqueous cell battery having the electrode of the invention, and Figs. 2 and 3 each illustrate an example of a cylindrical nonaqueous secondary battery cell having the electrode of the invention.

The coin cell 10 illustrated in Fig. 1 has a positive electrode 1 capable of releasing lithium ions, a positive electrode current collector 1a, a negative electrode 2 capable of absorbing/releasing lithium ions released from the positive electrode, a negative electrode current collector 2a, a nonaqueous electrolyte 3, a positive electrode case 4 made of stainless steel, a negative electrode case 5 made of stainless steel, a polypropylene gasket 6, and a polyethylene separator 7.

As illustrated in Figs. 2 and 3, the cylindrical battery cell 10' includes a negative electrode 11, a negative electrode current collector 12, a positive electrode 13, a positive electrode current collector 14, a nonaqueous electrolyte 15, a separator 16, a positive electrode terminal 17, a negative electrode terminal 18, a negative electrode plate 19, a negative electrode lead 20, a positive electrode plate 21, a positive electrode lead 22, a case 23, an insulating plate 24, a gasket 25, a safety valve 26, and a PTC element 27.

The exterior member of the secondary battery may be a laminate pouch film or a metal can. The exterior member usually has a thickness of 0.5 mm or smaller, preferably 0.3 mm or smaller. The exterior member may have a flat (thin), prismatic, cylindrical, coin, or button shape.

The laminate pouch film may be a multilayer film having a metal layer between resin films. The metal layer is preferably of aluminum foil or aluminum alloy foil for weight reduction. The resin film may be of polypropylene, polyethylene, nylon, or polyethylene terephthalate. The laminate film may be formed into a desired pouch shape and sealed by fusion.

The metal can may be made, e.g., of stainless steel, aluminum, or an aluminum alloy. The aluminum alloy is preferably the one containing magnesium, zinc, silicon, or a like element. The long-term reliability and heat dissipation in a high-temperature environment of aluminum or aluminum alloys are drastically improved by limiting the content of a transition metal, such as iron, copper, nickel, or chromium, to 1% or less.

While the invention has been described with reference to its preferred embodiments, it will be appreciated that the invention is not construed as being limited thereto, and various changes and modifications can be made by those skilled in the art without departing from the spirit and scope thereof.

### Examples

The invention will now be illustrated in greater detail by way of Examples and Comparative Examples. It should be understood, however, that the invention is not deemed to be limited thereto.

The invention will now be illustrated in greater detail by way of Examples and Comparative Examples. It should be understood, however, that the invention is not deemed to be limited thereto. In Examples and Comparative Examples, the sulfur content of organosulfur compounds was determined by elemental analysis using a CHN analyzer capable of measuring sulfur and oxygen concentrations (e.g., vario MICRO cube, from Elementar). Unless otherwise specified, all the parts and percentages are by mass.

### Preparation Example 1 - Preparation of sulfur-modified elastomer compound

A hundred parts of a diene rubber (UBEPOL BR150L from Ube Industries, Ltd.) as rubber and 1000 parts of elemental sulfur (average particle size: 200 µm, from Sigma Aldrich) were allowed to react in the presence of 25 parts of zinc diethyl dithiocarbamate (from Tokyo Chemical Ind. Co., Ltd.) as a vulcanization accelerator in accordance with the procedure described in JP 2015-092449A, Example 1. The resulting reaction product was pulverized to give organosulfur compound A1, a sulfur-modified elastomer compound, having an average particle size of 15 µm and a sulfur content of 45.2%.

### Preparation Example 2 - Preparation of sulfur-modified polynuclear aromatic compound

A hundred parts of anthracene (from Tokyo Chemical Ind. Co., Ltd.) as a polynuclear aromatic compound and 500 parts of elemental sulfur (average particle size: 200 µm, from Sigma Aldrich) were allowed to react in accordance with the procedure of JP 2012-150934A, Reference Example 1. The resulting reaction product was pulverized to give organosulfur compound A2, a sulfur-modified polynuclear aromatic compound, having an average particle size of 16 µm and a sulfur content of 47.7%.

### Preparation Example 3 - Preparation of sulfur-modified pitch compound

A hundred parts of coal pitch (coal tar from Yoshida Seiyusho Co., Ltd.) as a pitch compound and 500 parts of elemental sulfur (average particle size: 200 µm, from Sigma Aldrich) were allowed to react in accordance with the procedure of JP 2012-099342A, Example 1. The resulting reaction product was pulverized to give organosulfur compound A3, a sulfur-modified pitch compound, having an average particle size of 15 µm and a sulfur content of 32.5%.

### Preparation Example 4 - Preparation of sulfur-modified aliphatic hydrocarbon oxide

A hundred parts of 1-decanol (from Tokyo Chemical Ind.) as an aliphatic hydrocarbon oxide and 300 parts of elemental sulfur (average particle size: 200 µm, from Sigma Aldrich) were allowed to react in accordance with the procedure of WO 2016/158675, Example 1. The resulting reaction product was pulverized to give organosulfur compound A4, a sulfur-modified aliphatic hydrocarbon oxide, having an average particle size of 13 µm and a sulfur content of 49.2%.

### Preparation Example 5 - Preparation of sulfur-modified aliphatic hydrocarbon oxide

A hundred parts of 1-decanoic acid (from Tokyo Chemical Ind.) as an aliphatic hydrocarbon oxide and 300 parts of elemental sulfur (average particle size: 200 µm, from Sigma Aldrich) were allowed to react in accordance with the procedure of WO 2016/158675, Example 14. The resulting reaction product was pulverized to give organosulfur compound A5, a sulfur-modified aliphatic hydrocarbon oxide, having an average particle size of 15 µm and a sulfur content of 52.7%.

### Preparation Example 6 - Preparation of sulfur-modified polyether compound

A hundred parts of polyethylene glycol 4000 (melting temperature: 56° to 60°C, from Tokyo Chemical Ind.) as a polyether compound and 500 parts of elemental sulfur (average particle size: 200 µm, from Sigma Aldrich) were allowed to react in accordance with the procedure of WO 2016/159212, Example 12. The resulting reaction product was pulverized to give organosulfur compound A6, a sulfur-modified polyether compound, having an average particle size of 13 µm and a sulfur content of 40.4%.

### Preparation Example 7 - Preparation of sulfur-modified polyamide compound

A hundred parts of 4-aminobenzoic acid (from Tokyo Chemical Ind.) as a compound having a carboxy and an amino group per molecule and 500 parts of elemental sulfur (average particle size: 200 µm, from Sigma Aldrich) were allowed to react in accordance with the procedure of JP 0609924, Example 1. The resulting reaction product was pulverized to give organosulfur compound A7, a sulfur-modified polyamide compound, having an average particle size of 11 µm and a sulfur content of 47.0%.

### Preparation Example 8 - Preparation of sulfur-modified polyacrylonitrile compound

A sulfur-modified polyacrylonitrile compound was synthesized with reference to Example 2 of patent literature 2.

A hundred parts of polyacrylonitrile powder (from Sigma Aldrich, classified using a sieve with an opening of 30 µm) and 200 parts of elemental sulfur (average particle size: 200 µm, from Sigma Aldrich) were allowed to react in accordance with the procedure of patent literature 2, Example 2. The resulting reaction product was pulverized to give organosulfur compound A8, a sulfur-modified polyacrylonitrile compound, having an average particle size of 10 µm and a sulfur content of 37.1%.

### Examples 1 to 23 and Comparative Examples 1 to 13

### Preparation of slurry composition:

In 120 parts of water as a solvent were added 92.0 parts of each of the organosulfur compounds (designated A1 to A8) as an electrode active material, 3.5 parts of acetylene black (from Denka Co., Ltd.) as a conductive agent, 1.5 parts of carbon nanotubes (VGCF, from Showa Denko K.K.) as a conductive agent, 1.5 parts of styrene-butadiene rubber (40% aqueous dispersion, from Zeon Corp.) as a binder, and 1.5 parts of sodium carboxymethyl cellulose (from Daicel FineChem, Ltd.) as a binder and dispersed in the solvent using a rotation-revolution mixer at a revolution speed of 1600 rpm and a rotation speed of 800 rpm for 5 minutes to make a slurry. One of the basic compounds below (designated B 1 through B8) was added to the slurry and mixed to adjust the pH of the slurry to the value shown in Table 1 or 2 below at 25°C to prepare a slurry composition containing each of the organosulfur compounds of Preparation Examples 1 through 8.

### Basic compounds:

B1: 28% aqueous ammonia
B2: 1M sodium hydroxide aqueous solution
B3: 2M triethylamine aqueous solution
B4: 2M sodium acetate aqueous solution
B5: 4M pyridine aqueous solution
B6: 2M tetramethylethylenediamine aqueous solution
B7: 2M ethylenediamine aqueous solution
B8: 0.05M disodium hydrogenphosphate aqueous solution

### Making of positive electrode:

The above prepared slurry composition was applied to a 20 µm-thick aluminum foil current collector (designated C1) using a doctor blade and left to stand at 90°C for 1 hour to dry. The resulting electrode was cut to size. The electrode was further dried in vacuo at 120°C for 2 hours immediately before use. The positive electrode thus made had an electrode capacity of 3.5 mAh/cm². Positive electrodes were made in the same manner except for replacing current collector C1 with stainless steel foil with a thickness of 10 µm (designated C2) or carbon-coated aluminum foil with an aluminum foil thickness of 20 µm and a carbon layer thickness of 1 µm (designated C3).

### Preparation of nonaqueous electrolyte:

LiPF₆ was dissolved in a 50/50 vol% mixed solvent of ethylene carbonate and diethyl carbonate in a concentration of 1.0 mol/L to prepare a liquid electrolyte.

### Assembly of battery - 1

The resulting disk-shaped electrode and, as a counter electrode, a disk cut out of 500 µm-thick lithium foil were put into a case with a glass filter interposed therebetween as a separator. The nonaqueous liquid electrolyte prepared above was poured into the case, and the case was closed and sealed using a swager to make a 20 mm diameter, 3.2 mm thick coin-shaped lithium secondary battery of Example 8.

Batteries in Examples 1 to 23 were assembled using the electrodes made from the pH-adjusted slurry compositions, and those in Comparative Example 1 to 13 were assembled using the electrodes made from the slurry compositions with the pH inadequately adjusted. The combinations of the organosulfur compound, the basic compound, the pH of the slurry composition, and the current collector are shown in Tables 1 and 2.

### Making of positive electrode:

In 90.0 parts of N-methylpyrrolidone as a solvent were added 90.0 parts of Li(Ni_{1/3}Co_{1/3}Mn_{1/3})O₂ (NCM111 from Nihon Kagaku Sangyo Co., Ltd.) as a positive electrode active material, 5.0 parts of acetylene black (from Denka Co., Ltd.) as a conductive agent, and 5.0 parts of polyvinylidene fluoride (from Kureha Corp.) as a binder and dispersed in the solvent in a rotation-revolution mixer at a revolution speed of 1600 rpm and a rotation speed of 800 rpm for 30 minutes to make a slurry composition.

The slurry composition was applied to an aluminum foil current collector using a doctor blade and left to stand at 90°C for 1 hour to dry. The resulting positive electrode was cut to size. The electrode was further dried in vacuo at 120°C for 2 hours immediately before use.

### Assembly of battery - 2

The positive electrode having Li(Ni_{1/3}Co_{1/3}Mn_{1/3})O₂ as an active material and, as a counter electrode, a negative electrode A8 having an organosulfur compound as an active material were put into a case with a separator (Celgard 2325 from Celgard, LLC) interposed therebetween. The nonaqueous liquid electrolyte prepared above was poured into the case, and the case was closed and sealed using a swager to make a 20 mm diameter, 3.2 mm thick coin-shaped Li-ion secondary battery of Examples 24 to 26 and Comparative Examples 14 and 15.

### Evaluation - charge/discharge cycle test A

The nonaqueous secondary batteries of Examples 1 to 23 and Comparative Examples 1 to 13 were each placed in a thermostat at 25°C and charged to 3 V and discharged to 1 V for a total of 9 cycles: first at a charge/discharge rate of 0.1C for 3 cycles, then at 0.2C for 3 cycles, finally at 0.5C for 3 cycles. The discharge capacity of the 9th cycle in a unit of mAh/g is shown in Tables 1 and 2.

### Evaluation - charge/discharge cycle test B

The nonaqueous secondary batteries of Examples 24 to 26 and Comparative Examples 14 and 15 were each placed in a thermostat at 25°C and charged to 3.2 V and discharged to 0.8 V for a total of 105 cycles: first at a charge/discharge rate of 0.1C for 5 cycles and then at 0.5C for 100 cycles. The discharge capacity of the 105th cycle in a unit of mAh/g is shown in Tables 1 and 2. The discharge capacity is the capacity relative to the weight of the positive electrode active material.

**Table 1**

| | Organosulfur Compound | Basic Compound | | Slurry Composition | Current Collector | Capacity | Cycle Test |
|---|---|---|---|---|---|---|---|
| | | Kind | Amount (part) | | | | |
| Example 1 | A1 | B1 | 0.3 | 6.6 | C1 | 425 | A |
| Example 2 | A2 | B1 | 0.3 | 6.7 | C1 | 401 | A |
| Example 3 | A3 | B1 | 0.3 | 6.1 | C1 | 361 | A |
| Example 4 | A4 | B1 | 0.3 | 6.4 | C1 | 408 | A |
| Example 5 | A5 | B1 | 0.3 | 6.3 | C1 | 389 | A |
| Example 6 | A6 | B1 | 0.3 | 6.2 | C1 | 463 | A |
| Example 7 | A7 | B1 | 0.3 | 6.6 | C1 | 405 | A |
| Example 8 | A8 | B1 | 0.3 | 6.0 | C1 | 409 | A |
| Example 9 | A8 | B2 | 0.3 | 6.1 | C1 | 412 | A |
| Example 10 | A8 | B3 | 0.9 | 6.3 | C1 | 415 | A |
| Example 11 | A8 | B4 | 3.2 | 5.9 | C1 | 409 | A |
| Example 12 | A8 | B5 | 6.2 | 5.6 | C1 | 406 | A |
| Example 13 | A8 | B6 | 0.5 | 5.7 | C1 | 419 | A |
| Example 14 | A8 | B7 | 0.2 | 5.6 | C1 | 426 | A |
| Example 15 | A8 | B8 | 0.2 | 6.0 | C1 | 429 | A |
| Example 16 | A8 | B1 | 0.3 | 6.0 | C2 | 416 | A |
| Example 17 | A8 | B1 | 0.3 | 6.0 | C3 | 419 | A |
| Example 18 | A8 | B1 | 1.2 | 8.7 | C1 | 418 | A |
| Example 19 | A8 | B1 | 1.2 | 8.7 | C2 | 416 | A |
| Example 20 | A8 | B1 | 1.2 | 8.7 | C3 | 425 | A |
| Example 21 | A8 | B1 | 0.2 | 4.4 | C1 | 419 | A |
| Example 22 | A8 | B1 | 0.2 | 4.4 | C2 | 420 | A |
| Example 23 | A8 | B1 | 0.2 | 4.4 | C3 | 425 | A |
| Example 24 | A8 | B1 | 0.3 | 6.0 | C1 | 119 | A |
| Example 25 | A8 | B2 | 0.3 | 6.1 | C1 | 121 | B |
| Example 26 | A8 | B1 | 0.3 | 6.0 | C3 | 122 | B |

**Table 2**

| | Organosulfur compound | Basic Compound | | Slurry Composition | Current Collector | Capacity | Cycle Test |
|---|---|---|---|---|---|---|---|
| | | Kind | Amount (part) | | | | |
| Comp. Ex. 1 | A1 | B1 | 0.1 | 3.3 | C1 | 114 | A |
| Comp. Ex. 2 | A2 | B1 | 0.1 | 3.1 | C1 | 109 | A |
| Comp. Ex. 3 | A3 | B1 | 0.1 | 3.7 | C1 | 76 | A |
| Comp. Ex. 4 | A4 | B1 | 0.1 | 3.6 | C1 | 103 | A |
| Comp. Ex. 5 | A5 | B1 | 0.1 | 3.5 | C1 | 99 | A |
| Comp. Ex. 6 | A6 | B1 | 0.1 | 3.5 | C1 | 111 | A |
| Comp. Ex. 7 | A7 | B1 | 0.1 | 3.6 | C1 | 101 | A |
| Comp. Ex. 8 | A8 | B1 | 0.1 | 3.3 | C1 | 105 | A |
| Comp. Ex. 9 | A8 | B1 | 0.1 | 3.3 | C2 | 408 | A |
| Comp. Ex. 10 | A8 | B1 | 0.1 | 3.3 | C3 | 414 | A |
| Comp. Ex. 11 | A8 | B2 | 1.5 | 10.1 | C1 | 232 | A |
| Comp. Ex. 12 | A8 | B2 | 1.5 | 10.1 | C2 | 411 | A |
| Comp. Ex. 13 | A8 | B2 | 1.5 | 10.1 | C3 | 413 | A |
| Comp. Ex. 14 | A8 | B1 | 0.1 | 3.3 | C1 | 35 | B |
| Comp. Ex. 15 | A8 | B1 | 0.1 | 3.3 | C3 | 110 | B |

As can be seen from Examples and Comparative Examples, the nonaqueous secondary batteries of Examples 1 to 23 made by using the slurry compositions of the invention prove capable of achieving high charge/discharge capacity even when combined with an inexpensive aluminum foil current collector. In contrast, the nonaqueous secondary batteries of Comparative Examples 1 to 13 are inferior to those of Examples 1 to 23 in charge/discharge capacity.

### Industrial Applicability

The invention provides a slurry composition that forms an electrode mixture layer with high adhesion to a current collector, even when in using inexpensive aluminum foil as a current collector, thereby providing a lithium ion secondary battery with high capacity.

### Reference Sign List:

- 1:: positive electrode
- 1a:: positive electrode current collector
- 2:: negative electrode
- 2a:: negative electrode current collector
- 3:: electrolyte
- 4:: positive electrode case
- 5:: negative electrode case
- 6:: gasket
- 7:: separator
- 10:: coin-shaped nonaqueous secondary battery
- 10':: cylindrical nonaqueous secondary battery
- 11:: negative electrode
- 12:: negative electrode current collector
- 13:: positive electrode
- 14:: positive electrode current collector
- 15:: electrolyte
- 16:: separator
- 17:: positive electrode terminal
- 18:: negative electrode terminal
- 19:: negative electrode plate
- 20:: negative electrode lead
- 21:: positive electrode
- 22:: positive electrode lead
- 23:: case
- 24:: insulating plate
- 25:: gasket
- 26:: safety valve
- 27:: PTC element

## Claims

1. A slurry composition comprising an organosulfur compound, a binder, an electroconductive agent, and a solvent, and having a pH of 4.0 to 9.0.

2. The slurry composition according to claim 1, further comprising a basic compound.

3. The slurry composition according to claim 2, wherein the basic compound is at least one member selected from the group consisting of ammonia, alkylamine compounds, ethanolamine compounds, polyamine compounds, aromatic amine compounds, alkali metal hydroxides, carbonic salt compounds, carboxylic salt compounds, and phosphoric salt compounds.

4. The slurry composition according to any one of claims 1 to 3, wherein the organosulfur compound is at least one member selected from the group consisting of sulfur-modified elastomer compounds, sulfur-modified polynuclear aromatic compounds, sulfur-modified pitch compounds, sulfur-modified aliphatic hydrocarbon oxides, sulfur-modified polyether compounds, polythienoacene compounds, carbon polysulfide compounds, sulfur-modified polyamide compounds, and sulfur-modified polyacrylonitrile compounds.

5. The slurry composition according to any one of claims 1 to 4, wherein the binder and the electroconductive agent are present in amounts of 1 to 30 parts and 0.1 to 50 parts, respectively, by mass per 100 parts by mass of the organosulfur compound.

6. An electrode comprising a current collector and an electrode mixture layer formed on the current collector, the electrode mixture layer being formed of the slurry composition according to any one of claims 1 to 5.

7. The electrode according to claim 6, wherein the current collector is aluminum foil.

8. The electrode according to claim 6 or 7, being for lithium ion secondary batteries.
